Europäisches Patentamt

European Patent Office

Office européen des brevets

(19)

(11) Numéro de publication: **0 017 290**
**B1**

(12) **FASCICULE DE BREVET EUROPEEN**

(45) Date de publication du fascicule du brevet: **06.04.83**

(51) Int. Cl.³: **B 60 R 9/04**

(21) Numéro de dépôt: **80200278.2**

(22) Date de dépôt: **26.03.80**

(54) **Porte-bagages, respectivement coffre auxiliaire à bagages pour véhicules automobiles.**

(30) Priorité: **28.03.79 BE 57691**

(43) Date de publication de la demande:
**15.10.80 Bulletin 80/21**

(45) Mention de la délivrance du brevet:
**06.04.83 Bulletin 83/14**

(84) Etats contractants désignés:
**AT CH DE FR GB IT LU NL SE**

(56) Documents cités:
**DE - C - 1 041 822**
**DE - U - 1 897 779**
**DE - U - 1 921 875**
**DE - U - 1 954 308**
**FR - A - 853 371**
**FR - A - 924 595**
**FR - A - 1 242 887**
**FR - A - 1 395 376**
**FR - A - 1 397 374**
**FR - E - 77 437**
**GB - A - 787 796**

(73) Titulaire: **Benit, Claude**
**Transvaalstraat 17**
**B-2600 Berchem (BE)**

(72) Inventeur: **Benit, Claude**
**Transvaalstraat 17**
**B-2600 Berchem (BE)**

(74) Mandataire: **Donné, Eddy**
**M.F.J.Bockstael Arenbergstraat 13**
**B-2000 Anvers (BE)**

Courier Press, Leamington Spa, England.

Porte-bagages, respectivement coffre auxiliaire à bagages pour véhicules automobiles

L'invention concerne un porte-bagages pour véhicules automobiles, plus spécialement un porte-bagages pouvant être utilisé comme porte-bagages proprement dit, même pour das bagages ou articles plus grands que le gabarit du porte-bagages ou comme coffre à bagages auxiliaire, la transformation de porte-bagages proprement dit en coffre à bagages et vice-versa étant très simple.

Un tel type de porte-bagages est révélé dans le modèle d'utilité DE—U—1,897,779. Dans ce document, est décrit un porte-bagages, respectivement un coffre auxiliaire, du type comportant un socle formant plancher de chargement pourvu de supports épousant la forme du toit de la voiture et des moyens permettant la fixation amovible de ce socle au toit, ce socle présentant un rebord circonférentiel pouvant former assise pour un couvercle.

Toutefois, ce porte-bagages connu présente, e.a., l'inconvénient qu'il reste une petite distance entre les bords inférieurs dudit socle, d'où pénétration de l'air au-dessous du porte-bagages avec tous les désavantages qui en résultent tels qu'e.a. bruits venant des turbulences de l'air au-dessous du porte-bagages et augmentation de la résistance de l'air.

En plus, la fixation du socle sur le toit du véhicule se fait par l'extérieur.

L'invention est caractérisée en ce que le plancher de chargement est supporté par des traverses creuses formant logement pour les moyens de fixation, ces traverses creuses épousant la forme du toit afin de former support pour le socle.

D'autres particularités de l'invention ressortiront de la description ci-après qui se réfère aux dessins annexés, dans lesquels:

la figure 1 représente en perspective une voiture pourvue d'un porte-bagages, respectivement d'un coffre à bagages, sélon l'invention;

la figure 2 représente, en perspective et à plus grande échelle, le porte-bagages, respectivement le coffre à bagages, selon l'invention, le couvercle étant partiellement enlevé;

les figures 3 et 4 représentent des coupes selon les lignes III—III et IV—IV de la figure 2;

la figure 5 représente une vue à échelle agrandie de la partie indiquée en F5 à la figure 4;

la figure 6 représente une vue selon la ligne VI—VI de la figure 5;

la figure 7 représente une vue semblable à celle de la figure 5, le dispositif de fixation étant représenté dans sa position de libération;

la figure 8 représente une coupe selon la ligne VIII—VIII de la figure 2;

la figure 9 représente à plus grande échelle la partie indiquée en F9 à la figure 8;

les figures 10 et 11 représentent en vue latérale des voitures automobiles pourvues d'un porte-bagages ou coffre à bagages dont le couvercle est, respectivement, en deux et en trois pièces;

la figure 12 représente une vue semblable à celle de la figure 5, mais pour une variante d'exécution;

les figures 13 et 14 représentent des vues en perspective de véhicules utilitaires, pourvus d'une coffre selon l'invention.

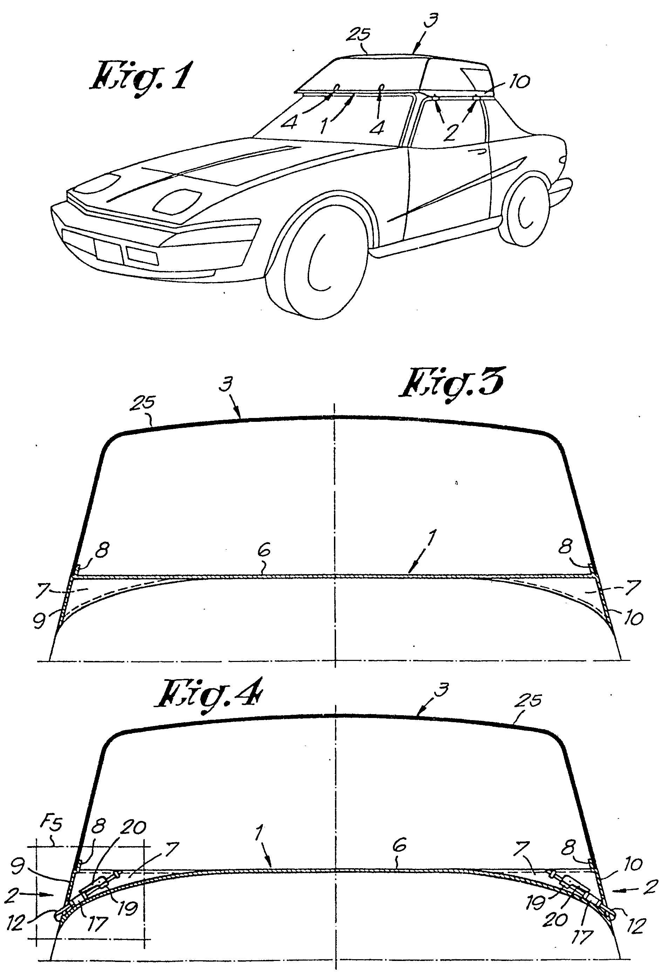

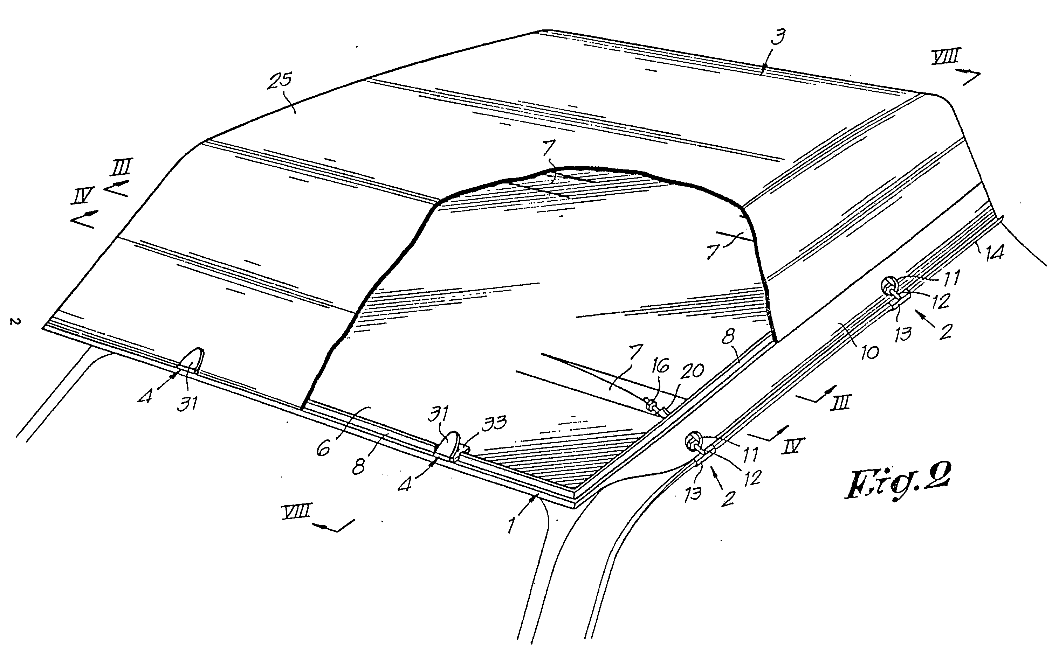

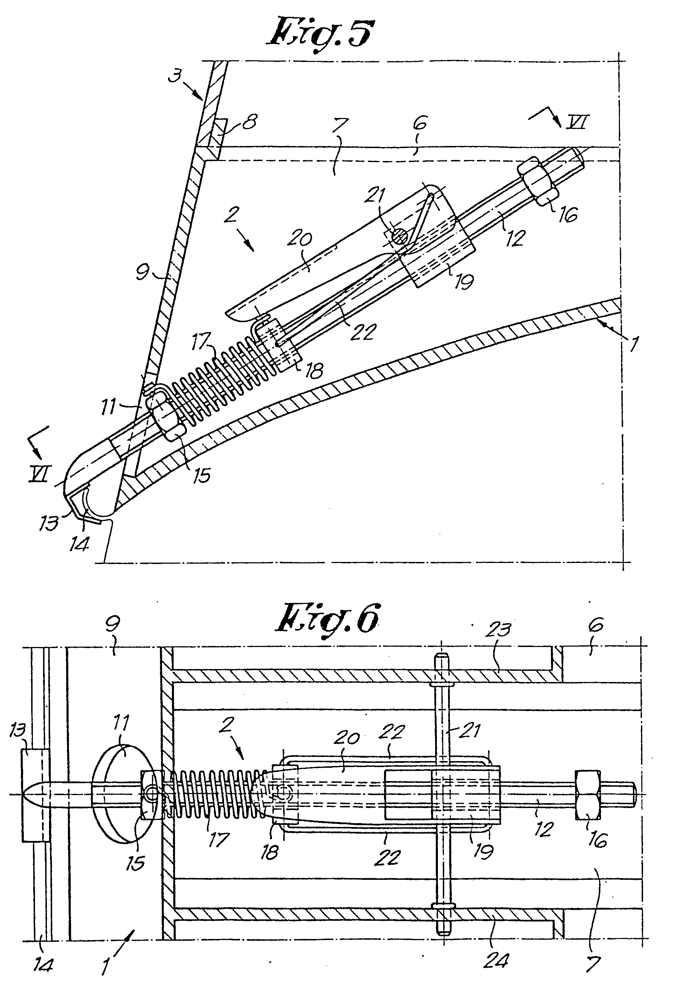

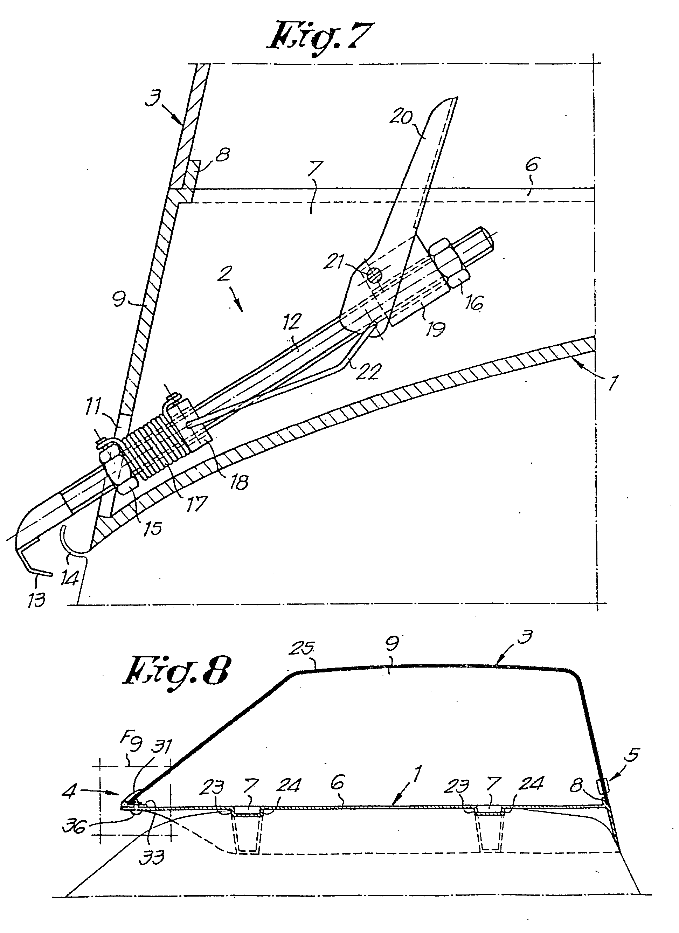

Comme représenté dans les figures, le porte-bagages, respectivement coffre à bagages, selon l'invention, consiste substantiellement en un socle *1*, un dispositif de fixation *2* et, éventuellement, un couvercle *3* fixé audit socle par des charnières *4* et un dispositif de fermeture *5*.

La pièce principale du porte-bagages, respectivement du coffre à bagages, est constituée par le susdit socle *1* formant plancher de chargement et, dans le cas d'un coffre à bagages, formant également le fond de ce coffre. Il se présente sous la forme d'un plateau *6* à surface plane dont les dimensions sont déterminées par celles du toit de la voiture.

Le socle *1* présente plusieurs traverses creuses *7* dont la partie inférieure épouse la forme du toit afin de former support pour le socle. De préférence, ces traverses seront pourvues, à leur surface inférieure extérieure d'un revêtement, non représenté dans les dessins, en vue d'éviter tout dommage au toit de la voiture. Le nombre de ces traverses *7* varie en fonction de la longueur du porte-bagages, de la forme de ce dernier et du poids que le socle devra supporter.

Le socle *1* présente en son pourtour également un rebord *8* pouvant former assise pour le couvercle *3*. Il présente aussi à chaque bord longitudinal, un renforcement ou support, respectivement *9—10*, en forme de bande au moyen duquel le socle *1* repose sur le toit, respectivement dans les gouttières de la voiture.

Les susdits supports *9—10* sont, dans le prolongement de chaque traverse *7*, pourvus de passages *11* pour les dispositifs de fixation *2*. Ces passages permettent également l'évacuation de l'eau de pluie lorsque le socle est utilisé comme porte-bagages, c'est-à-dire sans emploi du couvercle *3*.

Les traverses creuses *7* servent également de logement aux dispositifs de fixation *2*, de manière que ces dispositifs *2* soient situés à un niveau inférieur au plancher de chargement proprement dit.

Il va de soi que le socle *1* peut être reculé ou avancé par rapport au toit de la voiture, selon les exigences de l'utilisateur.

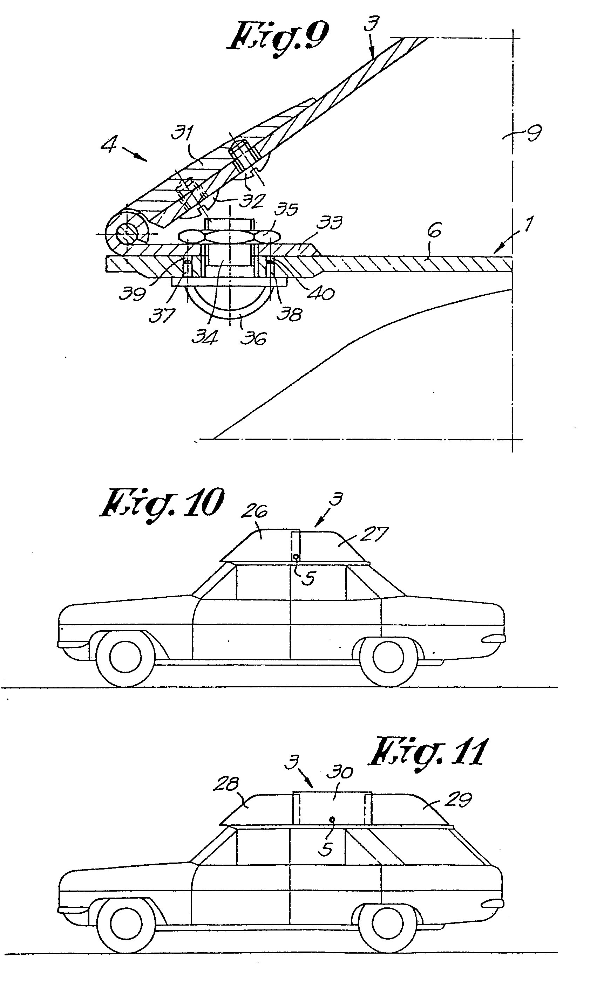

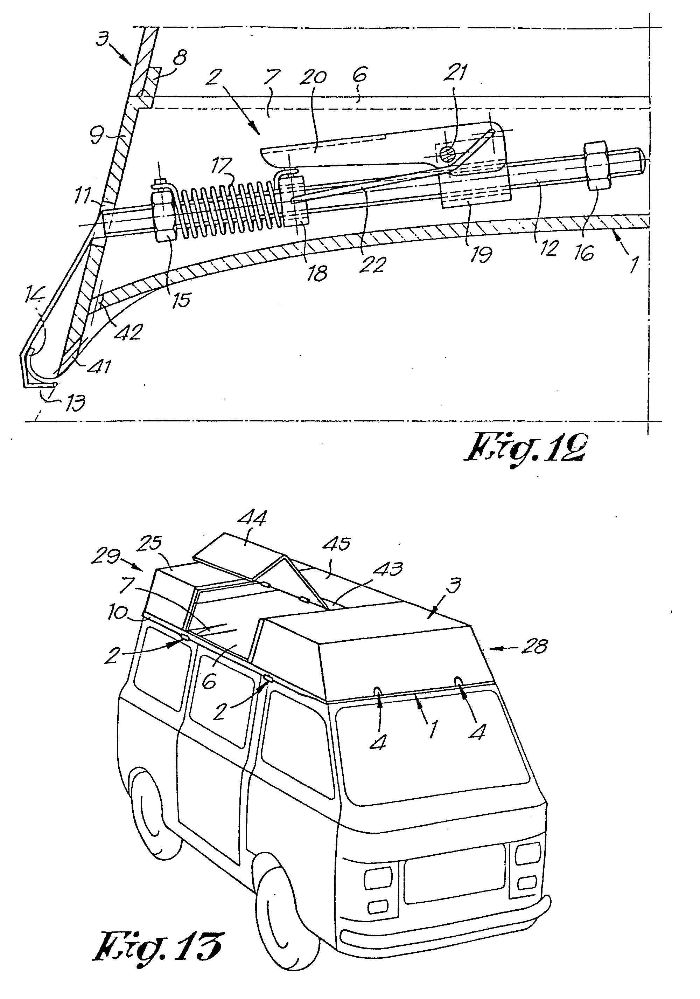

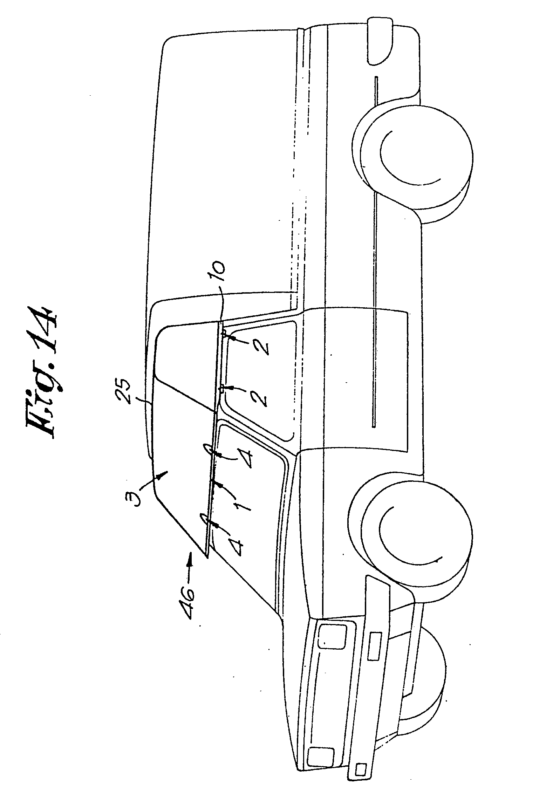

Les dispositifs de fixation *2* sont, chacun, constitués par une tige filetée *12* pourvue d'un crochet *13* pouvant coopérer avec la gouttière 14. Avec la tige filetée *12* coopèrent deux écrous, respectivement *15—16*, permettant, d'une part, de régler l'effort exercé par le crochet *13* sur la gouttière *14* et, d'autre part, la libération maximum (voir figure 7) du dispositif *2*. Ce dernier est complété par un ressort *17* fixé entre l'écrou *15* et un curseur ou pièce *18* pouvant se déplacer librement le long de la tige *12*; un deuxième curseur ou une pièce *19* pouvant également se déplacer librement le long de la susdite tige; une clenche *20* pouvant tourner autour d'un axe *21* prévu sur la susdite pièce et un moyen de liaison *22* à "point mort" entre les pièces *18* et *19*.

La liaison de chaque dispositif de fixation *2* par rapport audit socle *1* est obtenue par l'axe *21* dont les extrémités sont engagées dans les flancs *23—24* de la traverse correspondante.

Il va de soi que, par la manoeuvre de clenches *20*, le socle *1* puisse être fixé ou libéré.

Quoique, dans les dessins, le socle *1* est pourvu de quatre dispositifs *2*, il est également possible de prévoir, du côté conducteur, des dispositifs *2* tels que décrits et, au côté opposé, des simples crochets.

Le couvercle *3* est en une, deux ou trois parties, selon le type de véhicule, et délimité par sa hauteur et ses dimensions, le volume pouvant servir au transport de marchandises.

De préférence, ce couvercle *3* sera adapté à la forme aérodynamique de la voiture et respectera son concept général afin d'en préserver les lignes et l'esthétique tout en offrant une résistance minimum au vent.

Lorsque le couvercle est en une pièce *25*, il bascule sur ses charnières *4* placées de préférence à l'avant, la serrure *5* étant, dans ce cas, placée à l'arrière, ce qui permet l'accès du coffre par les deux côtés de la voiture. Comme représenté aux dessins, le couvercle vient s'emboîter à l'extérieur du rebord *8* du socle avant, éventuellement avec interposition d'un joint d'étanchéité, non représenté.

Il va de soi que les charnières du couvercle peuvent également être prévues aux autres bords du socle de manière que le couvercle s'ouvre, soit vers l'un des côtés, soit vers l'arrière du véhicule.

Dans le cas d'un couvercle en deux parties, respectivement *26—27* (figure 10), celles-ci basculent à l'ouverture respectivement vers l'avant et vers l'arrière, la partie avant venant se poser sur la partie arrière à la fermeture.

Dans le cas d'un couvercle en trois parties, respectivement *28—29—30* (figure 11), les parties avant et arrière pivotent de la même manière que dans l'exemple de la figure 10, tandis que la partie centrale *30* pivote vers l'un des côtés de la voiture.

Les charnières *4* sont représentées à la figure 9. Elles consistent substantiellement en une aile extérieure *31* fixée au couvercle *3* par des vis *32* et en une aile intérieure *33* fixée au socle *1* par un boulon *34* avec lequel coopère un écrou *35*. La tête du boulon *34* est pourvue, d'une part, d'un anneau *36* au moyen duquel le couvercle ou le coffre peut être suspendu lorsqu'il n'est pas utilisé et, d'autre part, de deux arrêts, respectivement *37—38*, pouvant coopérer avec des trous, respectivement *39—40*, dans le socle *1* afin d'empêcher le démontage du couvercle par l'extérieur.

Il est évident qu'on peut prévoir, à l'intérieur du coffre, tout recouvrement quelconque.

Dans l'exécution de la figure 12, la traverse *7* ne suit pas la courbure du toit jusque dans la gouttière, mais fait corps avec le rebord *8* lequel repose, seul, dans la gouttière. Dans ce cas, des orifices d'évacuation des eaux de pluie sont représentés en *41* et *42*.

Il va de soi que le porte-bagage, respectivement le coffre auxiliaire, selon l'invention peut être utilisé aussi bien pour des voitures que pour des véhicules utilitaires.

C'est ainsi que la figure 13 représente un minibus pourvu d'un coffre selon l'invention.

Dans ce cas, les parties avant et arrière, respectivement *28* et *29* du couvercle, quoique maintenues par les charnières, ne basculent pas. Elles sont reliées entre elles par une poutre *43* rigide et démontable portant les parties centrales, respectivement *44* et *45*, du couvercle. Il va de soi que le nombre des parties centrales est illimité.

Enfin, dans la figure 14, est représenté un véhicule utilitaire dont la hauteur du caisson de chargement dépasse la hauteur de la cabine portant un coffre *46* selon l'invention. Ce coffre *46* convient parfaitement pour abriter, par exemple, une bonbonne de LPG gaz. Il est évident qu'un tel coffre peut être prévu sur tous les types de camions/camionnettes de 500 kg à 20 tonnes.

**Revendications**

1. Porte-bagages, respectivement coffre auxiliaire à bagages pour véhicules, du type comportant un socle (1) formant plancher de chargement (6) pourvu de supports (9—10) épousant la forme du toit de la voiture et des moyens (2) permettant la fixation amovible de ce socle (1) au toit, ce socle (1) présentant un rebord circonférentiel (8) pouvant former assise pour un couvercle (3), caractérisé en ce que le susdit plancher de chargement (6) est supporté par des traverses creuses (7) formant logement pour les moyens de fixation (2), ces traverses creuses (7) épousant la forme du toit afin de former support pour le socle.

2. Porte-bagages, selon la revendication 1, caractérisé en ce que le socle (1) est pourvu, à chaque bord longitudinal, d'un renforcement ou support (9—10) en forme de bande au moyen duquel le socle (1) repose dans les gouttières de la voiture.

3. Porte-bagages, selon la revendication 2, caractérisé en ce que les susdites bandes (9—10) sont pourvues, dans le prolongement de chaque traverse creuse (7), d'un passage (11) pour un dispositif de fixation (2) logeant dans cette traverse (7).

4. Porte-bagages, selon l'une des revendications précédentes, caractérisé en ce que les dispositifs de fixation (2) sont constitués par une tige filetée (12) pourvue d'un crochet (13) pouvant coopérer avec la gouttière (14) de la voiture; vers chaque extrémité de ladite tige (12), un écrou (15—16); en relation avec l'écrou voisin du susdit crochet (13), un ressort (17) dont l'autre extrémité est en relation avec un premier curseur (18) relié, au moyen d'une tige à "point mort" (22), à une clenche (20) fixée elle-même sur un deuxième curseur (19) immobilisé par rapport audit socle (1) du porte-bagages.

5. Porte-bagages selon l'une des revendications précédentes, caractérisé en ce que chaque dispositif de fixation (2) est solidarisé audit socle (1) au moyen d'un axe (21) dont les extrémités sont engagées dans les flancs (23—24) de la traverse correspondante.

6. Porte-bagages, selon l'une des revendications précédentes, caractérisé en ce que le couvercle peut être formé de deux ou trois pièces.

## Patentansprüche

1. Gepäckhalter bzw. Hilfsgepäckkoffer für Fahrzeuge der mit einem als Ladebühne (1) dienenden Boden (1) ausgestatteten Art, mit vier der Dachform des Fahrzeuges angepassten Trägern (9,10) und mit Mitteln (2) für die lösbare Befestigung des Bodens (1) am Dach, wobei dieser Boden (1) ein als Sitz für einen Deckel (3) dienenden Umfangsrand (8) aufweist, dadurch gekennzeichnet, dass die vorgenannte Ladebühne (6) durch zwei Hohlquerträger (7) getragen wird, worin die vorgenannten Befestigungsmittel (2) angeordnet sind und deren Form der Dachform des Fahrzeuges zwecks Unterstützung des vorgenannten Bodens (1) angepasst ist.

2. Gepäckhalter gemäss dem Anspruch 1, dadurch gekennzeichnet, dass der vorgenannte Boden (1) beiderseits in der Längsrichtung einen bandförmigen Wulst oder Träger (9,10) aufweist, womit der Boden (1) in den Längsrinnen des Fahrzeuges ruht.

3. Gepäckhalter gemäss dem Anspruch 2, dadurch gekennzeichnet, dass die vorgenannten Wülste (9,10) in der Verlängerung einesjeden Hohlquerträgers (7) einen Durchgang (11) für ein im betreffenden Hohlquerträger (7) angeordnetes Befestigungsmittel (2) aufweisen.

4. Gepäckhalter gemäss irgendeinem der vorhergehenden Ansprüche, dadurch gekennzeichnet, dass die vorgenannten Befestigungsmittel (2) bestehen aus einer Gewindespindel (12) mit einem mit einer Rinne (14) des Fahrzeuges zusammenwirkenden Haken (13); einer Mutter (15,16) an jedem Ende der vorgenannten Gewindespindel (12); einer mit der benachbarten Mutter des vorgenannten Hakens (13) zusammenwirkenden Feder (17), deren gegenüberliegendes Ende mit einem ersten Läufer (18) zusammenwirkt, der mittels einer Totpunktstange (22) mit einem Griff (20) verbunden ist, der seinerseits an einem unbeweglich in bezug auf den vorgenannten Boden (4) des gepäckhalters montierten zweiten Läufer (19) befestigt ist.

5. Gepäckhalter gemäss irgendeinem der vorhergehenden Ansprüche, dadurch gekennzeichnet, dass jedes Befestigungsmittel (2) mit einer Achse (21) am Boden (1) befestigt ist, deren Enden in die Seiten (23,24) des entsprechenden Querträgers hineinstecken.

6. Gepäckhalter gemäss irgendeinem der vorhergehenden Ansprüche, dadurch gekennzeichnet, dass der Deckel zwei- oder dreiteilig ausgeführt sein kann.

## Claims

1. Luggage-carrier or auxiliary trunk for vehicles of the type comprising a base (1) forming a loading floor (6), provided with supports (9—10) corresponding in shape to the roof of the car and means (2) allowing the removable fixing of this base (1) to the roof, this base (1) having a circumerential raised edge (8) which can serve as a seating for a cover (3), characterized in that the aforesaid loading floor (6) is supported by hollow cross-pieces (7) forming housings for the fixing means (2), these cross-pieces (7) corresponding in shape to the roof in order to form supports for the base.

2. Luggage-carrier according to claim 1, characterized in that the base (1) is provided on each longitudinal edge with a reinforcement or support (9—10) in the shape of a strip, by means of which the base (1) rests in the roofgutters of the car.

3. Luggage-carrier according to claim 2, characterized in that the aforesaid strips (9—10) are provided, in prolongation of each hollow-cross-piece (7), with a passage (11) for a fixing device (2) housed in this cross-piece (7).

4. Luggage-carrier according to one of the preceding claims, characterized in that the fixing devices (2) are constituted by a threaded rod (12) provided with a hook (13) which can cooperate with the roof-gutter (14) of the car; near to each end of the aforesaid rod (12), a nut (15—16); in relation with the nut which is adjacent to the aforesaid hook (13), a spring (17) the other end of which is in relation with a first cursor (18) assembled by means of a rod with a "neutral position" (22) to a latch (20) which itself is fixed on a second cursor (19) which is immobilized in relation to the aforesaid base (1) of the luggage-carrier.

5. Luggage-carrier according to one of the preceding claims, characterized in that each fixing device (2) is interlocked with the aforesaid base (1) by means of a shaft (21) the ends

7 **0 017 290** 8

of which are engaged in the sides (23—24) of the corresponding cross-piece.

6. Luggage-carrier according to one of the preceding claims, characterized in that the cover may be formed of two or three pieces.

0 017 290

*Fig. 1*

*Fig.3*

*Fig.4*

1

Fig. 2

**Fig. 5**

**Fig. 6**

0 017 290

## Fig. 7

## Fig. 8

4

*Fig.9*

*Fig.10*

*Fig.11*

5

Fig.12

Fig.13

6

Fig. 14

0017 290